Europäisches Patentamt

European Patent Office

Office européen des brevets

(19)

(11) Veröffentlichungsnummer: **0 043 067**
A2

(12) **EUROPÄISCHE PATENTANMELDUNG**

(21) Anmeldenummer: **81104795.0**

(22) Anmeldetag: **22.06.81**

(51) Int. Cl.³: **F 25 B 27/00**
F 25 B 29/00, F 02 G 5/04

(30) Priorität: **30.06.80 DE 3024673**

(43) Veröffentlichungstag der Anmeldung:
**06.01.82 Patentblatt 82/1**

(84) Benannte Vertragsstaaten:
**AT BE CH DE FR GB IT LI LU NL SE**

(71) Anmelder: **SIEMENS AKTIENGESELLSCHAFT Berlin
und München
Postfach 22 02 61
D-8000 München 22(DE)**

(72) Erfinder: **Regner, Robert
Franz-Marc-Strasse 50
D-7920 Heidenheim(DE)**

(54) **Blockheizkraftwerk.**

(57) Blockheizkraftwerke sind zur Wärmeversorgung von Wärmeverbrauchern bekannt. Gemäß der Erfindung ist zusätzliche eine Wärmepumpe vorgesehen, deren Kompressor (7) über eine lösbare Kupplung (6) von dem als Asynchronmaschine (5) ausgeführten Stromerzeuger angetrieben werden kann und deren Kondensator (9) in den Abwärmekreislauf der Wärmekraftmaschine eingeschaltet ist. Auch die Kupplung (4) zwischen der Wärmekraftmaschine und der Asynchronmaschine ist lösbar, so daß die Asynchronmaschine entweder an die Wärmekraftmaschine oder an die Wärmepumpe oder an beide gleichzeitig gekuppelt werden kann. Vorteilhafterweise wird dem Verdampfer der Wärmepumpe die aus einem zu kühlenden Raum (11) in einem Kühlkreislauf aufgenommene Wärme zugeführt.

EP 0 043 067 A2

SIEMENS AKTIENGESELLSCHAFT
Berlin und München

Unser Zeichen
VPA 80 P 3 0 9 4 ¡ E

Blockheizkraftwerk

Die Erfindung betrifft ein Blockheizkraftwerk, bestehend aus einer Wärmekraftmaschine, deren Abwärme zur Wärmeversorgung über Wärmetauscher geführt ist, und einem an diese gekuppelten Stromerzeuger.

Derartige Blockheizkraftwerke sind bekannt. In Zeiten geringen Wärmebedarfs sind sie jedoch schlecht ausgenutzt.

Der Erfindung liegt die Aufgabe zurunde, Primärenergie für die Wärmeversorgung von Wärmeverbrauchern optimal zu nutzen und das Kraftwerk auch zur Deckung von Lastspitzen heranzuziehen.

Gemäß der Erfindung wird diese Aufgabe dadurch gelöst, daß der als Asynchronmaschine mit zwei Wellenenden ausgeführte Stromerzeuger wahlweise an die Wärmekraftmaschine oder/und an den Kompressor einer Wärmepumpe kuppelbar ist, deren Kondensator in Reihe mit den Wärmetauschern der Wärmekraftmaschine liegt. Damit ergibt sich die Möglichkeit, zu Zeiten hohen Wärmebedarfs die Wärmekraftmaschine über die leer mitlaufende Asynchronmaschine gemeinsam mit der Wärmepumpe zu betreiben oder zu Zeiten geringen Wärmebedarfs die Wärmekraftmaschine stillzusetzen und die Wärmepumpe durch die als Motor an das Netz angeschlossene Asynchronmaschine anzutreiben oder zur Deckung von Lastspitzen oder zur Lieferung von Notstrom nur die Asynchronmaschine als Generator an die Wärmekraftmaschine zu kuppeln.

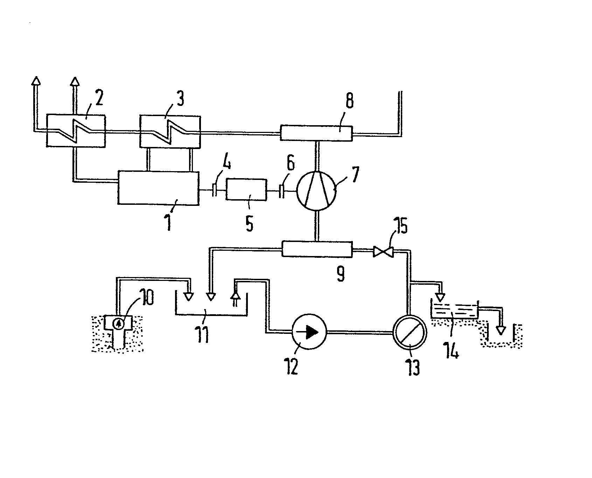

Anhand eines in der Zeichnung schematisch dargestellten Ausführungsbeispiels wird die Erfindung im folgenden erläutert.

Hk 2 Shi / 13.06.1980

Zur Verwertung der Abwärme sind an eine Wärmekraftmaschine 1, beispielsweise eine Verbrennungskraftmaschine oder eine Gasturbine, Wärmetauscher 2,3 angeschlossen, durch deren Sekundärkreislauf der Wärmeträger für die externe Wärmeversorgung strömt. Mittels einer lösbaren Kupplung 4 ist als Stromerzeuger eine Asynchronmaschine 5 mit der Wärmekraftmaschine verbunden. Über eine weitere lösbare Kupplung 6 ist der Kompressor 7 einer Wärmepumpe an die asynchrone Maschine gekuppelt. Der Kondensator 8 der Wärmepumpe liegt in Reihe zu den Wärmetauschern 2,3 in dem externen Wärmekreislauf.

Mit Vorteil kann dem Verdampfer 9 der Wärmepumpe zusätzlich die Wärme zugeführt werden, die ein Kühlkreislauf aus einem zu kühlenden Raum aufnimmt. In diesem Kühlkreislauf wird beispielsweise aus einem Brunnen 10 entnommenes Wasser gefördert. Das in ein Becken 11 geförderte Brunnenwasser wird durch Förderpumpen 12 über in dem zu kühlenden Raum angeordnete Verbraucher 13 in ein Rückkühlbecken 14 und nach Öffnen eines Ventilsatzes 15 zu einem Teil über den Verdampfer 9 in das Becken 11 zurück geleitet. Aus dem Rückkühlbecken 14 fließt das Wasser in das Erdreich zurück.

Mit dieser Einrichtung lassen sich folgende Betriebsarten durchführen:

1. In Zeiten erhöhten Wärmebedarfs, beispielsweise im Winter und in Übergangszeiten, wird die asynchrone Maschine 5 sowohl mit der Wärmekraftmaschine 1 als auch mit dem Kompressor 7 der Wärmepumpe gekuppelt. Die Asynchronmaschine ist vom Netz getrennt und läuft dementsprechend im Leerlauf als Rotationskörper mit. Dabei betragen die Reibungs- und Wirbelstromverluste der Asynchronmaschine ca. 2 % der Wellenleistung. Der Ventilsatz 15 in dem zusätzlichen Kühlkreislauf ist geöffnet, so daß ein Teil der von dem Kühlkreislauf aus dem zu kühlenden Raum aufgenommenen Wärme über den Verdampfer auf den Wärmepumpenkreislauf übertragen wird. Das aus dem Verdampfer abströmende Wasser wird in das Becken 11 zurückgespeist.

2. In Zeiten geringen Wärmebedarfs, beispielsweise im Nachtbetrieb unter Ausnutzung des Nachtstromtarifs, ist die Asynchronmaschine nur mit dem Kompressor der Wärmepumpe gekuppelt und treibt diesen als Motor an. Dabei wird dem Verdampfer ebenfalls die vom Kühlkreislauf aufgenommene Wärme zugeführt.

3. Zur Deckung von Lastspitzen ist nur die Asynchronmaschine an die Kraftmaschine gekuppelt und speist als Generator in das Netz. Da die Wärmepumpe abgekuppelt ist, wird der Ventilsatz 15 im Kühlkreislauf geschlossen.

4. Zur Notstromversorgung ist ebenfalls nur die Asynchronmaschine an die Kraftmaschine gekuppelt und arbeitet als Generator im Parallelbetrieb zu einem Notstrom-Synchrongenerator.

2 Patentansprüche
1 Figur

Patentansprüche

1. Blockheizkraftwerk, bestehend aus einer Wärmekraftmaschine, deren Abwärme zur Wärmeversorgung über Wärmetauscher geführt ist, und einem an diese gekuppelten Stromerzeuger, d a d u r c h g e k e n n z e i c h n e t , daß der als Asynchronmaschine mit zwei Wellenenden ausgeführte Stromerzeuger (5) wahlweise an die Wärmekraftmaschine (1) und/oder an den Kompressor (7) einer Wärmepumpe (7,8,9) kuppelbar ist, deren Kondensator (8) in Reihe mit den Wärmetauschern (2,3) der Wärmekraftmaschine liegt.

2. Blockheizkraftwerk nach Anspruch 1, d a d u r c h g e k e n n z e i c h n e t , daß der Verdampfer (9) der Wärmepumpe (7,8,9) in einem Kühlkreislauf (10 bis 15) angeordnet ist, durch den ein zur Kühlung eines Raumes umgewälztes Medium strömt.